# EUROPÄISCHE PATENTSCHRIFT

(11) **EP 3 153 242 B1**
(45) Veröffentlichungstag und Bekanntmachung des Hinweises auf die Patenterteilung: **28.12.2022**
(21) Anmeldenummer: 16189927.3
(22) Anmeldetag: 21.09.2016
(51) Int. Cl.: B07C 5/36

(54) **ANSTEUERUNG EINER FÖRDERANLAGE**
ACTUATION OF A CONVEYING SYSTEM
COMMANDE DE TRANSPORTEUR

(30) Priorität: 09.10.2015 DE 102015117241
(43) Veröffentlichungstag der Anmeldung: 12.04.2017
(73) Patentinhaber: Deutsche Post AG, 53113 Bonn (DE)
(72) Erfinder: Hartmann, Bernd, 53501 Grafschaft-Leimersdorf (DE); Tzschichholtz, Ingo, 60435 Frankfurt (DE)
(74) Vertreter: Cohausz & Florack

(56) Entgegenhaltungen:
- EP-A1- 1 184 310
- WO-A1-00/76887
- WO-A1-2004/039706
- DE-A1- 19 512 575
- DE-A1-102010 030 908
- US-A1- 2003 141 165
- US-A1- 2015 107 960

## Beschreibung

### GEBIET DER ERFINDUNG

Die vorliegende Erfindung betrifft die Ansteuerung einer Förderanlage mit Sortierfunktion, und insbesondere ein Verfahren, eine Vorrichtung und ein Computerprogramm für eine solche Ansteuerung sowie ein System in dem eine solche Ansteuerung implementiert ist.

### HINTERGRUND DER ERFINDUNG

Förderanlagen mit Sortierfunktion sind aus der Praxis für eine Vielzahl von Einsatzgebieten bekannt. Eine Sortierfunktion kann beispielsweise vorgesehen werden, um Stückgüter an einer von mehreren Ausgabestellen bereitzustellen. Dort können sie beispielsweise einem Förderband zugeführt oder in einen Rollcontainer verbracht werden. Stückgüter können dabei zum Beispiel Packstücke, wie Pakete oder Briefe, sein, aber auch andere Gegenstände, wie unverpackte Waren oder Zwischenprodukte.

Packstücke können in der Logistik in Fahrzeugen als Schüttgut transportiert sowie in Anlagenteilen einer Förderanlage als Schüttgut gespeichert werden. Moderne Verfahren der Entladetechnik erlauben auch eine effiziente Entladung von Wechselbehältern mit Packstücken derart, dass Packstücke der Fördertechnik als Schüttgut zugeführt werden können. Schüttgut in der Logistik kann dabei in drei Klassen eingeteilt werden: 3D-Bulk, 2D-Bulk und 1D-Bulk. Bei einem 3D-Bulk liegen Packstücke über-, unter-, neben-, vor- und hintereinander in ungeordneter Folge. Bei einem 2D-Bulk liegen Packstücke neben-, vor- und hintereinander in ungeordneter Reihenfolge, aber nicht über- oder untereinander. Bei einem 1D-Bulk liegen Packstücke hintereinander in ungeordneter Reihenfolge, aber nicht neben-, unter- oder übereinander. Packstücke liegen hintereinander genau dann, wenn keine zwei Packstücke aus seitlicher Betrachtung (rechtwinklig zur Förderrichtung) sich überdecken. Dabei spielt der Abstand zwischen den Packstücken keine Rolle. Packstücke gelten darüber hinaus als vereinzelt, wenn sie im lD-Bulk mit Zwischenabstand größer Null angeordnet sind.

Der Transport erfolgt in vielen Förderanlagen zunächst als 3D-Bulk oder, überwiegend, als 2D-Bulk. In den meisten Bereichen von Förderanlagen erfolgt der Transport von Packstücken dann aber als Stückgutstrom, also als 1D-Bulk, da nur so das individuelle Packstück seiner Endstelle im System zugeführt werden kann.

Aus der WO 2004/039706A1 ist ein System zum Handhaben von Gegenständen bekannt, wobei mindestens ein Sensor die Position der Gegenstände bestimmt, und wobei eine Steuereinheit in Kommunikation mit dem mindestens einen Sensor steht.

Die EP 1184 310 A1 zeigt ein Verfahren zum Einreihen von Objekten, wobei hierzu Bilder in einer vertikalen Ebene an einer Querachse zur Beförderungsrichtung am Ende einer Zuführeinheit erfasst werden.

Die WO 00/76887 A1 zeigt eine Vorrichtung zum Handhaben von Stückgütern in arrayförmiger, flächenhafter Ausgestaltung. Die Vorrichtung besitzt mehrere arrayförmig angeordnete Fördermittel, wobei eine Bildaufnahmeeinrichtung zur Identifizierung der Stückgüter verwendet wird.

Aus der US 2003/141165 A1 ist ein Verfahren zur Aufteilung von Stückgütern bekannt. Hierzu werden Arrays gebildet, wobei ein Erfassungssystem die Position der Stückgüter in Bezug auf die Arrays bestimmen kann.

Die DE 102010030908 A1 beschreibt Verfahren zur Klassifizierung und Sortierung von in Saatgutpartien enthaltenen Objekten und zugehörige Vorrichtungen. Dabei soll die Vermessung des Saatgutes (als eine dreidimensionale Struktur) mittels optischer Verfahren durchgeführt werden.

Aus der US 2015/0107960 A1 sind Weiterleitbälle im Zusammenspiel mit elektronisch aktivierten Kolben bekannt. Zusätzlich sind lichtdetektierende Sensoren vorgesehen. Diese Sensoren sind unterhalb der Sortierfläche jeweils an einem Kolben angeordnet. Sie detektieren im Falle einer Blockierung des Lichteinfalls durch einen Gegenstand, dass sich der Gegenstand über dem Kolben bzw. über dem dazugehörigen Weiterleitball befindet, wodurch sich die Position des Gegenstandes auf der Sortierfläche ermitteln lässt.

Weiterhin zeigt DE-A-195 12 575 ein Verfahren umfassend die Schritte: - Erhalten von Daten von mindestens einer Erfassungseinrichtung, die regelmäßig Stückgüter auf einer Sortierfläche einer Förderanlage erfasst, - regelmäßiges Bestimmen eines von einem jeweiligen Stückgut eingenommenen Bereichs auf der Sortierfläche basierend auf den erhaltenen Daten mittels Triangulationen, solange sich das Stückgut auf der Sortierfläche befindet, - Ermitteln von Steuerbefehlen für ein Ansteuern eines Roboter, wobei jeder Roboterarm einer Teilfläche der Sortierfläche zugeordnet ist, basierend auf einem für das jeweilige Stückgut vorgesehenen Ziel - Ansteuern der Antriebselemente des Roboters mit den ermittelten Steuerbefehlen.

### ALLGEMEINE BESCHREIBUNG EINIGER BEISPIELHAFTER AUSFÜHRUNGSFORMEN DER ERFINDUNG

Eine der Aufgaben der Erfindung besteht darin, eine besonders effiziente Nutzung einer Sortierfläche einer Förderanlage zu ermöglichen.

Die Aufgabe wird gelöst durch das in Anspruch 1 definierte Verfahren, die in Anspruch 7 definierte Vorrichtung, das in Anspruch 10 definierte System und das in Anspruch 11 definierte Computerprogramm. Vorteilhafte Ausgestaltungen ergeben sich aus den abhängigen Ansprüchen.

Ein Ausführungsbeispiel eines erfindungsgemäßen Verfahrens umfasst ein Erhalten von Daten von mindestens einer Erfassungseinrichtung, die regelmäßig Stückgüter auf einer Sortierfläche einer Förderanlage erfasst, wobei mehreren Teilflächen der Sortierfläche jeweils ein separat ansteuerbares Antriebselement zugeordnet ist. Das Verfahren umfasst ferner ein regelmäßiges Bestimmen eines von einem jeweiligen Stückgut eingenommenen Bereichs auf der Sortierfläche basierend auf den erhaltenen Daten mittels Triangulationen, solange sich das Stückgut auf der Sortierfläche befindet. Das Verfahren umfasst ferner ein Ermitteln von Steuerbefehlen für ein Ansteuern der Antriebselemente, die einer Teilfläche zugeordnet sind, die einem von einem jeweiligen Stückgut eingenommenen, bestimmten Bereich auf der Sortierfläche entsprechen, basierend auf einem für das jeweilige Stückgut vorgesehenen Ziel an der Sortierfläche. Das Verfahren umfasst ferner ein Ansteuern der Antriebselemente mit den ermittelten Steuerbefehlen.

Ein Ausführungsbeispiel einer erfindungsgemäßen Vorrichtung umfasst Mittel zum Veranlassen der Vorrichtung oder eines Systems, eine beliebige Ausführungsform des erfindungsgemäßen Verfahrens auszuführen, wobei die Vorrichtung ferner umfasst: zumindest eine Erfassungseinrichtung, die mindestens zwei Kameras umfasst und regelmäßig Stückgüter auf einer Sortierfläche einer Förderanlage erfasst, wobei mehreren Teilflächen der Sortierfläche jeweils ein separat ansteuerbares Antriebselement zugeordnet ist, wobei die Vorrichtung regelmäßig einen von einem jeweiligen Stückgut eingenommenen Bereichs auf der Sortierfläche basierend auf den erhaltenen Daten mittels Triangulationen, solange sich das Stückgut auf der Sortierfläche befindet, bestimmt, wobei die Vorrichtung Steuerbefehle für ein Ansteuern der Antriebselemente, die einer Teilfläche zugeordnet sind, die einem von einem jeweiligen Stückgut eingenommenen, bestimmten Bereich auf der Sortierfläche entsprechen, basierend auf einem für das jeweilige Stückgut vorgesehenen Ziel an der Sortierfläche ermittelt, und wobei die Vorrichtung die Antriebselemente mit den ermittelten Steuerbefehlen ansteuert. Die Mittel können beispielhaft mindestens einen Speicher mit Programmanweisungen und mindestens einen Prozessor umfassen. Der mindestens eine Prozessor kann eingerichtet zum Ausführen von Programmanweisungen aus dem mindestens einen Speicher. Die Programmanweisungen können dazu eingerichtet sein, die Vorrichtung bzw. das System zu veranlassen, eine beliebige Ausführungsform des erfindungsgemäßen Verfahrens durchzuführen, wenn sie von dem mindestens einem Prozessor ausgeführt werden. Der Speicher kann ein flüchtiger oder nicht-flüchtiger Speicher sein. Der Speicher kann austauschbar oder fest in die Vorrichtung integriert sein. Die Vorrichtung kann beliebige weitere Komponenten umfassen. Es versteht sich, dass die Mittel alternativ zumindest teilweise auch schaltungstechnisch realisiert sein können. Die erfindüngsgemäße Vorrichtung kann beispielsweise eine Steuereinrichtung sein. Eine solche Steuereinrichtung kann beispielsweise ein Computer - etwa ein Industrie-PC - oder ein Server sein. Die erfindungsgemäße Vorrichtung kann ebenso ein Modul für eine beliebige Steuereinrichtung sein.

Ein Ausführungsbeispiel eines erfindungsgemäßen Systems umfasst eine beliebige Ausführungsform einer erfindungsgemäßen Vorrichtung und außerdem die Förderanlage mit der Sortierfläche und/oder die mindestens eine Erfassungseinrichtung angeordnet zum Erfassen von Stückgütern auf der Sortierfläche. Das System kann beliebige weitere Elemente umfassen.

Ein Ausführungsbeispiel eines erfindungsgemäßen Computerprogramms umfasst Programmanweisungen, die dazu eingerichtet sind, eine Vorrichtung nach einem der Ansprüche 7 bis 9 oder ein System nach Anspruch 10 zu veranlassen, eine beliebige Ausführungsform des erfindungsgemäßen Verfahrens durchzuführen, wenn sie von mindestens einem Prozessor ausgeführt werden.

Das Computerprogramm kann in einem gegenständlichen computerlesbaren Medium gespeichert sein, etwa in einem flüchtigen oder nicht-flüchtigen Programmspeicher einer Vorrichtung oder auf einem Speicherchip oder Memorystick. Es kann aber auch über das Internet und/oder über drahtgebundene Leitungen übertragen werden.

Um in einer Förderanlage eine hohe Effizient im Materialfluss zu erzielen, müssen viele Stückgüter pro Flächeneinheit transportiert werden. Durch die gängige Vereinzelung der Stückgüter für eine fördertechnische Verarbeitung, die eine materialflusstechnisch individuelle Behandlung der Stückgüter beinhaltet, nimmt jedoch die Effizienz stark ab.

Die Erfindung sieht daher für bestimmte beispielhafte Ausführungsformen vor, dass für den Transport von Stückgütern auf einer Sortierfläche die Positionen aller Stückgüter auf der Sortierfläche ständig von mindestens einer Erfassungseinrichtung erfasst werden. Die Daten der mindestens einen Erfassungseinrichtung ermöglichen eine Ortsvermessung eines Bereichs, der von einem Stückgut belegt wird, mittels Triangulation. Die Erfindung sieht des Weiteren für bestimmte beispielhafte Ausführungsformen vor, dass die Sortierfläche mehrere Teilflächen aufweist, in denen jeweils ein separat ansteuerbares Antriebselement zu einer Beförderung eines aufliegenden Stückguts beitragen kann. Basierend auf der ständig bestimmten Position eines Stückguts kann dann jeweils eine Ansteuerung genau der Antriebselemente erfolgen, die zum aktuellen Zeitpunkt zu einer Bewegung des Stückguts in Richtung seines Ziel beitragen können.

Durch das Erfassen von Geometrieinformationen eines Stückguts können Antriebselemente ganz gezielt in den Bereichen angesteuert werden, wo sie gerade zur Beförderung eines Stückguts benötigt werden. Damit kann zum einen jedes Stückgut einzeln manipuliert werden. Zum anderen stehen alle anderen Antriebselemente für die Beförderung anderer Stückgüter zur Verfügung. Die Erfindung ermöglicht damit eine Materialflusssteuerung im Bulkstrom so, als ob die Stückgüter vereinzelt wären. Hierdurch lässt sich die Sortierfläche sehr effizient für die parallele Sortierung einer Vielzahl von Stückgütern im 2D-Bulk nutzen. Auf diese Weise lässt sich mit einer relativ kleinen Gesamtfläche ein besonders hoher Durchsatz erzielen. Grenzen der gezielten Bewegung von Stückgütern sind damit nur noch durch die Fähigkeiten der verwendeten Antriebselemente gesetzt.

Die mindestens eine Erfassungseinrichtung kann beliebig gewählt werden, sofern es die von ihr gelieferten Daten ermöglichen, einen von einem jeweiligen Stückgut eingenommenen Bereich auf der Sortierfläche mittels Triangulation zu bestimmen. Die mindestens eine Erfassungseinrichtung kann beispielsweise eine Kamera oder mindestens zwei Kameras umfassen. In dem Fall umfassen die erfassten Daten Bilddaten. Die eingesetzten Kameras können dabei beliebig ausgewählt werden. Es kann sich zum Beispiel um Graustufenkameras, RGB-Farbkameras, hyperspektrale Kameras oder Multispektralkameras handeln. Sind mindestens zwei Kameras vorgesehen, so können Triangulationen für eine jeweilige Bereichsbestimmung auf den von zwei Kameras gleichzeitig erfassten Bilddaten basieren. Ist nur eine Kamera vorgesehen, so können Triangulationen jeweils auf nacheinander aufgenommenen Bilddaten basieren, während sich die Stückgüter auf der Sortierfläche bewegen. Zusätzlich oder alternativ zu mindestens einer Kamera kann die mindestens eine Erfassungseinrichtung verschiedene andere Sensortechniken einsetzen. So lässt sich beispielsweise mittels Lasertastern zwischen Laserpunkten differenzieren, die auf ein Stückgut treffen oder aber auf die Sortierfläche, um eine Grundlage für die Triangulationen zu erhalten. Ebenso kann für die Triangulationen beispielsweise ein Lichtschnittverfahren eingesetzt werden, für das die Erfassungseinrichtung neben einer Kamera eine Lichtquelle, etwa in Form eines Lasers, umfasst.

Das regelmäßige Bestimmen der Bereiche, die von einem jeweiligen Stückgut auf der Sortierfläche eingenommen werden, kann beispielsweise in Abständen von höchstens 1 Sekunde oder von höchstens 10 Sekunden erfolgen. Die Abstände können beispielsweise angepasst sein an die Größe der Teilflächen und der Bewegungsgeschwindigkeit der Stückgüter, beispielsweise so, dass erwartet werden kann, dass eine neue Bestimmung spätestens dann erfolgt, wenn ein Stückgut eine zuvor vollständig belegten Teilfläche wieder komplett freigegeben hat.

Die Sortierfläche kann zu einer beliebigen Einrichtung gehören. Sie kann beispielsweise zu einem Sortierer gehören, der die Stückgüter verschiedenen Zielen an der Sortierfläche zuführt, oder zu einem Singulierer, der die Stückgüter einzeln einem einzigen Ziel zuführt.

Die Sortierfläche kann eine rechteckige Form aufweisen, aber auch eine beliebige andere Form, wie eine L- oder U-Form. Durch bestimmte Formen kann die gewünschte Anzahl an Zuführstellen und Zielen an der Sortierfläche vorgesehen werden, während gleichzeitig die Gesamtfläche limitiert bleibt. Insbesondere kann ein beliebiges Verhältnis zwischen Umfang und Oberfläche derart gewählt werden, dass die Flächeneffizienz in Beziehung zur Anzahl möglicher Zuführeinrichtungen und Endstellen gesetzt werden kann.

Mit der Verwendung einer Vielzahl von Teilflächen und zugeordneten Antriebselementen, die bei entsprechender Ansteuerung ausgewählter Kombinationen in jedem Bereich der Sortierfläche Bewegungen in alle Richtungen erlauben, ergibt sich eine große Freiheit für Sortieralgorithmen. Es werden komplexe Sortierprozesse, einschließlich der Vereinzelung, ermöglicht.

In einer beispielhaften Ausführungsform ist die Sortierfläche geeignet, eine Mehrzahl von Stückgütern als 2D-Bulk aufzunehmen. Die Sortierfläche kann derart angeordnet sein, dass ihr eine Mehrzahl von Stückgütern als 1D-Bulk zuführbar ist, wobei sich durch die Bewegung der Stückgüter auf der Sortierfläche ein 2D-Bulk bilden kann. Die Sortierfläche kann alternativ derart angeordnet sein, dass ihr eine Mehrzahl von Stückgütern bereits als 2D-Bulk zuführbar ist. Der Sortierfläche kann dann eine Mehrzahl von Stückgütern als 2D-Bulk zugeführt werden, insbesondere in Form eines Stroms von Stückgütern.

Eine beispielhafte Ausführungsform umfasst des Weiteren ein Bestimmen einer Identifizierung der Stückgüter, die sich auf der Sortierfläche befinden, und ein Bestimmen des Ziels an der Sortierfläche für jedes identifizierte Stückgut anhand der Identifizierung des jeweiligen Stückguts. Die Identifizierung kann beispielsweise anhand von Bilddaten von mindestens einer Kamera erfolgen, beispielsweise anhand von erfassten Barcodes, Mustern oder Textmerkmalen. Das Ziel an der Sortierfläche kann beispielsweise von einem Endziel des Stückguts abhängen, wobei das Endziel durch die Identifizierung gegeben oder ermittelbar sein kann. Das Bestimmen der Identifizierung des Stückguts und des Ziels an der Sortierfläche kann durch ein Ausführungsbeispiel einer erfindungsgemäßen Vorrichtung erfolgen; ein Ausführungsbeispiel einer erfindungsgemäßen Vorrichtung kann hierzu optional aber auch auf Daten und/oder Dienste einer weiteren Vorrichtung zugreifen.

Während die Stückgüter also basierend auf einer Identifizierung verschiedenen Zielen zugeführt werden können, sind alternativ oder zusätzlich auch andere Kriterien für die Zielauswahl möglich. So könnten verschiedene Ziele auch basierend auf der Größe der Stückgüter bestimmt werden, oder es könnte jeweils ein Ziel für eine bestimmte Anzahl an Stückgütern bestimmt werden, bevor ein nächstes Ziel gewählt wird.

In einer beispielhaften Ausführungsform umfasst das Bestimmen eines von einem jeweiligen Stückgut eingenommenen Bereichs auf der Sortierfläche mittels Triangulationen basierend auf den erhaltenen Daten ein Ermitteln von Eckdaten für die Triangulationen. Sind die Daten Bilddaten von mindestens zwei Kameras, so kann für das Ermitteln der Eckdaten ein Auswerten von Strukturmerkmalen in den erhaltenen Bilddaten und/oder ein Auswerten von Geometrien in den erhaltenen Bilddaten und/oder ein Erkennen unterschiedlicher Materialien in den erhaltenen Bilddaten erfolgen. Solche Eckdaten können insbesondere Punkte an einem äußeren Rand eines Stückguts sein, die in den Bilddaten der mindestens zwei Kameras eindeutig als einander entsprechend identifiziert werden können. Hierfür kommen beispielsweise die Ecken der Oberfläche eines Stückguts in Frage. Für die Ermittlung der Eckdaten können aber auch Messwerte von beliebigen anderen Sensoren genutzt werden.

Für das Ermitteln von Steuerbefehlen für ein Ansteuern der Antriebselemente für ein jeweiliges Stückgut können auch zusätzliche Kriterien berücksichtigt werden. So können beispielsweise von anderen Stückgütern eingenommene Bereiche auf der Sortierfläche und/oder die Ziele von anderen Stückgütern an der Sortierfläche berücksichtigt werden, um Kollisionen und gegenseitige Behinderungen bei den veranlassten Bewegungen der Stückgüter zu vermeiden. Alternativ oder zusätzlich kann außerdem beispielsweise eine Auswertung eines dynamischen Verhaltens des Stückguts in Reaktion auf vorausgehende Ansteuerungen von Antriebselementen für das Stückgut berücksichtigt werden. Hierdurch kann ein Lerneffekt erzielt werden. Alternativ oder zusätzlich kann außerdem beispielsweise eine Ausgabe von mindestens einem Sensor berücksichtigt werden. Ein solcher Sensor kann ein ultraschallbasierter Sensor, ein laserbasierter Sensor oder ein beliebiger anderer Sensor sein, der dazu beitragen kann, Daten zu Packstücken auf der Sortierfläche zu erfassen. Solche Daten können sich beispielsweise ebenfalls auf die Geometrie, die Form oder das Material von Packstücken beziehen. Eine Auswertung von Reflektionen könnte beispielsweise auch genutzt werden, um lediglich die momentane Präsenz eines Stückguts an einem bestimmten Ort bzw. in einem bestimmten Bereich auf der Sortierfläche zu erfassen. Alternativ oder zusätzlich kann außerdem beispielsweise eine Rückmeldung der Antriebselemente berücksichtigt werden. Hierdurch können beispielsweise erfolgte gegenseitige Behinderungen detektiert und berücksichtigt werden und/oder es kann unterschiedlichen Gewichten der Stückgüter Rechnung getragen werden.

Eine Ermittlung von Steuerbefehlen für ein Ansteuern der Antriebselemente unter Berücksichtigung des dynamischen Gesamtsystems entspricht einem Beobachter- / Prädiktorenentwurf in der Regelungstechnik und kann einen adaptiven, selbstlernenden, optimierenden Regler ermöglichen.

In beispielhaften Ausführungsformen erfolgt zu keinem Zeitpunkt eine Bestimmung von Steuerbefehlen für ein Ansteuern der Antriebselemente für eine Gesamtstrecke eines Stückguts auf der Sortierfläche.

In einer beispielhaften Ausführungsform werden die Steuerbefehlen für ein Ansteuern der Antriebselemente jeweils nur für Antriebselemente ermittelt, die einer Teilfläche zugeordnet sind, die von dem von dem jeweiligen Stückgut eingenommenen, bestimmten Bereich auf der Sortierfläche umfasst ist. Das heißt, zumindest zu Beginn der Ansteuerung mit einem Satz Steuerbefehle bewegen sich stets nur Antriebselemente, die sich unter einem Stückgut befinden.

In einer beispielhaften Ausführungsform werden die Steuerbefehlen für ein Ansteuern der Antriebselemente jeweils nur für Antriebselemente ermittelt werden, die einer Teilfläche zugeordnet sind, die sich zumindest mit dem von dem jeweiligen Stückgut eingenommenen, bestimmten Bereich auf der Sortierfläche überschneidet. Dies kann insbesondere sinnvoll sein, wenn die Teilbereiche relativ groß sind im Vergleich zu den von den Packstücken belegten Bereichen.

In einer beispielhaften Ausführungsform werden die Steuerbefehlen für ein Ansteuern der Antriebselemente jeweils nur für Antriebselemente ermittelt werden, die einer Teilfläche zugeordnet sind, die dem von dem jeweiligen Stückgut eingenommenen, bestimmten Bereich auf der Sortierfläche entspricht (d.h. die Teilfläche ist überdeckt von dem Bereich oder zumindest überlappend mit dem Bereich) oder an diese angrenzen. Hierdurch können einige wenige Antriebselemente schon vorausschauend angesteuert werden. Dies kann die erforderliche Frequenz der Ermittlung von neuen Steuerbefehlen (bei gleicher angestrebter Bewegungsgeschwindigkeit der Stückgüter) reduzieren.

In einer beispielhaften Ausführungsform werden die Steuerbefehlen für ein Ansteuern der Antriebselemente zumindest für den größten Teil eines Wegs eines Stückguts auf der Sortierfläche jeweils nur für einen Teil eines Restwegs des Stückguts bis zu dem bestimmten Ziel ermittelt werden. Steuerbefehle werden zu einem gegebenen Zeitpunkt also weder für den Gesamtweg noch für den jeweiligen verbleibenden kompletten Restweg ermittelt, solange sich das Stückgut nicht unmittelbar vor dem Ziel befindet.

In einer beispielhaften Ausführungsform ist die Ansteuerung der Antriebselemente somit eine adaptive Ansteuerung. Diese kann beispielsweise mittels Fuzzylogic oder neuronalem Netzwerk oder einem Fuzzy-Neuro-System realisiert sein. Hier kann sich ein optimales Gesamtverhalten auf der Sortierfläche mit der adaptiven Wegbestimmung und Zielbestimmung dann automatisch ergeben. Andere Optimierungsalgorithmen können aber ebenso zugrunde gelegt werden.

In einer beispielhaften Ausführungsform umfassen die Antriebselemente eine Vielzahl geeignet angeordneter Röllchen oder Kugeln, Streifen eines Streifenförderers, Abschnitte eines Abschnittsförderers oder Gurte eines Gurtförderers. Weitere separat ansteuerbare Antriebselemente sind ebenso möglich. Es versteht sich, dass die Antriebselemente zusätzlich zu den genannten, unmittelbar mit den Stückgütern interagierenden Komponenten einen jeweils zugeordneten Motor und ein Getriebe oder andere Verbindungselemente umfassen können, wobei beispielsweise diese Motoren über die Steuerbefehle angesprochen werden können.

Einzeln ansprechbare Antriebselemente können beispielsweise in Form einer Matrix angeordnet werden. Dies ermöglicht den Einsatz von Hashing-Logiken ähnlich wie in Datenbanken.

Durch ein Anordnen von Sortierflächen auf mehreren Ebenen mit Verbindungen lassen sich neue Sortierarchitekturen realisieren, die weitere Effizienzgewinne ermöglichen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: eine schematische Darstellung einer beispielhaften Ausführungsform eines erfindungsgemäßen Systems; und
- Fig. 2: ein Ablaufdiagramm mit Verfahrensschritten einer beispielhaften Ausführungsform des erfindungsgemäßen Verfahrens.

### DETAILLIERTE BESCHREIBUNG EINIGER BEISPIELHAFTER AUSFÜHRUNGSFORMEN DER ERFINDUNG

Die vorliegende Erfindung wird im Folgenden anhand von beispielhaften Ausführungsformen beschrieben, die eine effiziente individuelle Manipulation von Packstücken ermöglichen.

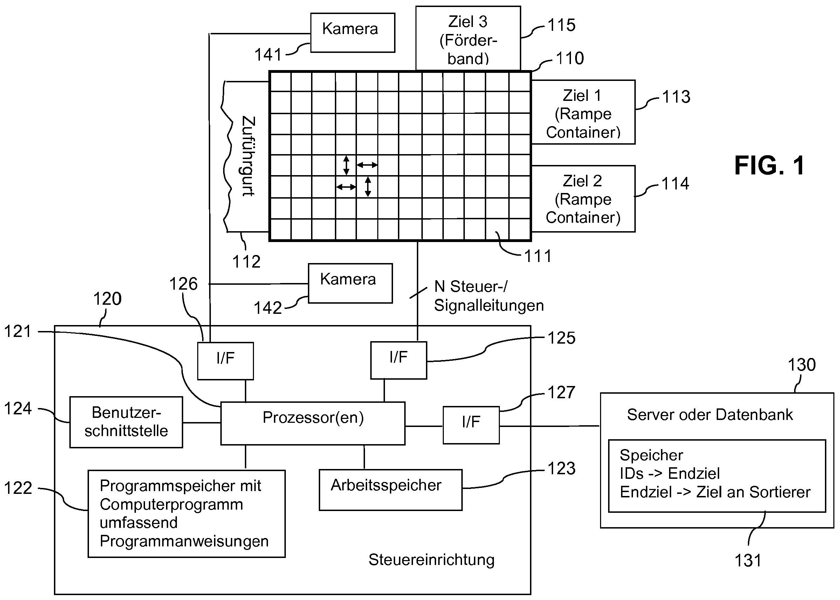

Figur 1 ist eine schematische Darstellung einer beispielhaften Ausführungsform eines erfindungsgemäßen Systems.

Das System umfasst eine Förderanlage, eine Steuereinrichtung 120, einen Server und/oder eine Datenbank 130 und zwei Kameras 141, 142.

Die Förderanlage umfasst einen Sortierer mit einer Sortierfläche 110, die in Teilflächen 111 unterteilt ist. In Figur 1 sind diese Teilflächen 111 beispielhaft als eine Vielzahl von Quadraten dargestellt. Jedem der Teilflächen 111 ist ein einzeln ansteuerbares Antriebselement zugeordnet. Jedes Antriebselement kann etwa ein mit einem kleinen Motor verbundenes Förderelement umfassen. Der Motor kann auf das Förderelement je nach Steuersignal eine vorgegebene Kraft mit einer vorgegebenen Richtung übertragen. Die Richtung wird dabei durch das Steuersignal vorgegeben, während die Kraft durch das Steuersignal vorgegeben werden kann oder fest vorgegeben sein kann. Beispielhaft handelt es sich bei dem Sortierer um einen Matrixröllchenförderer. In zwei Richtungen drehbare Röllchen sind hier als Förderelemente von N Antriebselementen in Form einer Matrix angeordnet, bezüglich ihrer Achse in beide Dimensionen alternierend in Längs und Querrichtung, was in Figur 1 für vier beispielhaft ausgewählte Teilflächen mit Doppelpfeilen illustriert ist. Der Einsatz von Röllchen kann besonders energieeffizient sein, da diese kein separates Fahrorgan benötigen. Alternativ kann aber eine Sortierfläche 110 mit beliebigen anderen einzeln ansteuerbaren Antriebselementen genutzt werden, wobei auch die Matrixform für die Anordnung nicht wesentlich ist. Insbesondere muss die Sortierfläche 110 auch keine Rechteckform aufweisen.

Neben dem Sortierer weist die Förderanlage zum Beispiel eine Zuführeinrichtung auf, etwa einen Zuführgurt 112 oder einen anderen Stetigförder. Der Zuführgurt 112 ist ausgeformt und angeordnet, der Sortierfläche 110 Packstücke in einem 2D-Bulk zuzuführen. Auf dem Zuführgurt 112 selber könnten die Packstücke auch als 3D-Bulk befördert werden. Die Förderanlage kann des Weiteren eine an die Sortierfläche 110 angrenzende erste Rampe zu einem Rollcontainer als erstes mögliches Ziel 113 für Packstücke, eine an die Sortierfläche 110 angrenzende zweite Rampe zu einem Rollcontainer als zweites mögliches Ziel 114 für Packstücke und ein an die Sortierfläche 110 angrenzendes weiteres Förderband als ein drittes mögliches Ziel 115 für Packstücke umfassen.

Die Steuereinrichtung 120 ist eine beispielhafte Ausführungsform einer erfindungsgemäßen Vorrichtung. Die Steuereinrichtung 120 kann eine Spezialvorrichtung sein, oder ein entsprechend eingerichteter herkömmlicher Computer oder Server. Die Steuereinrichtung 120 umfasst einen Prozessor 121, einen Programmspeicher 122, einen Arbeitsspeicher 123, eine Benutzerschnittstelle 124 und verschiedene Kommunikationsschnittstellen (I/F) 125, 126, 127. Der Prozessor 121 ist mit jeder dieser Komponenten 122-127 verbunden.

Der Programmspeicher 122 ist ein nicht-flüchtiger Speicher, der Computerprogramme mit Programmanweisungen speichert. Er kann zusätzlich Parameter und andere Daten speichern. Der Prozessor 121 ist dazu eingerichtet, Programmanweisungen aus dem Programmspeicher 122 auszulesen und auszuführen. Der Arbeitsspeicher 123 kann ein flüchtiger Speicher sein, der vom Prozessor 121 zum Zwischenspeichern von Programmanweisungen und Daten genutzt werden kann.

Die Benutzerschnittstelle 124 kann beliebige Ein- und Ausgabemitteln aufweisen, wie zum Beispiel einen Bildschirm, ggf. mit Touchscreen, Lautsprecher, eine Tastatur und/oder Knöpfe, usw. Die Benutzerschnittstelle 124 kann für Instandhaltungs-, Optimierungs- und Betriebszwecke vorgesehen sein.

Die Schnittstellen 125, 126,127 können mindestens eine Schnittstelle 125 für eine Verbindung mit den Antriebselementen des Sortierers, mindestens eine Schnittstelle 126 für eine Verbindung mit den Kameras 141, 142 und mindestens eine Schnittstelle 127 für eine Verbindung mit dem Server 130 umfassen. Die mindestens eine Schnittstelle 125 für die Antriebselemente könnte N Schnittstellen für eine jeweilige Steuer- und Signalleitung zu jeder der Antriebselemente umfassen. Die mindestens eine Schnittstelle 126 für die Kameras 141, 142 könnte zwei Schnittstellen für eine jeweilige Datenleitung umfassen. Die mindestens eine Schnittstelle 127 für den Server 130 könnte eine Schnittstelle für eine Datenleitung umfassen. Alle Schnittstellen können drahtgebunden oder drahtlos sein. Eine Schnittstelle für drahtlose Verbindungen - z. B. einer WLAN Schnittstelle - könnte auch für sämtliche vorgesehenen drahtlosen Verbindungen unter Verwendung unterschiedlicher Kanäle gemeinsam genutzt werden. Die Steuereinrichtung 120 kann verschiedene weitere Komponenten umfassen, beispielsweise einen weiteren Speicher, in dem Vorgaben einer Bedienperson und andere Daten gespeichert werden können. Die Steuereinrichtung 120 kann speziell dem Sortierer 110 zugeordnet sein oder einer Mehrzahl von Sortierern der Förderanlage. In letzterem Fall sind Schnittstellen für eine Kommunikation mit den Kameras und Antriebselementen jeder der Sortierer vorhanden.

Der Server 130 umfasst eine Datenbank oder bietet einen Zugriff auf eine solche Datenbank. Alternativ könnte die Steuereinrichtung 120 auch ohne Zwischenschaltung eines Servers direkt mit einer Datenbank 130 verbunden sein. Die Datenbank umfasst einen Speicher 131, in dem eine Zuordnung von aktuell gültigen Identifizierungen (IDs) von Packstücken zu den Endzielen der Packstücke gespeichert sind, und zusätzlich für den Sortierer 110 oder separat für eine Mehrzahl von Sortierern eine Zuordnung von Endzielen zu einem Ziel 113, 114, 115 an dem jeweiligen Sortierer. Alternativ könnte in der Datenbank auch nur die Zuordnung von aktuell gültigen Identifizierungen von Packstücken zu den Endzielen der Packstücke gespeichert sein. Dann könnte in der Steuereinrichtung 120 vorgegeben sein, welches Endziel welchem Ziel 113, 114, 115 an der Sortierfläche 110 des Sortierers zugeordnet ist. Diese Information könne in einem Speicher der Steuereinrichtung 120 gespeichert sein, und jeweils von einer Bedienperson über die Benutzerschnittstelle 124 aktualisiert werden.

Die Kameras 141, 142 sind beispielhafte Erfassungseinrichtungen. Sie können beispielsweise normale RGB Farbkameras sein, oder Spezialkameras, wie hyperspektrale Kameras, die eine Differenzierung zwischen verschiedenen Materialien von aufgenommenen Bildern erleichtern. Um eine verbesserte Erfassung der Ausmaße von Packstücken zu ermöglichen, können die Kameras auch geeignete optische Filter aufweisen. Die Kameras 141, 142 sind so angeordnet, dass sie jeweils die komplette Sortierfläche erfassen können, jedoch aus unterschiedlichen Blickwinkeln. Der Abstand der Kameras 141, 142 zueinander ist mit hoher Genauigkeit bekannt und als Parameter in Programmspeicher 122 oder in einem weiteren Speicher der Steuereinrichtung 120 hinterlegt. Jedem Bildpunkt eines von den Kameras 141, 142 aufgenommenen Bildes kann in Hinblick auf die Orientierung der Kameras 141, 142 zueinander ein bestimmter Winkel zugeordnet sein. Diese Zuordnung kann für jede Kamera 141, 142 ebenfalls in Programmspeicher 122 oder in einem weiteren Speicher der Steuereinrichtung 120 hinterlegt sein. Insbesondere bei einer großen Sortierfläche könnten auch mehrere Paare von Kameras eingesetzt werden, die jeweils einen anderen bestimmten Bereich der Sortierfläche erfassen.

Die dargestellten oder beschriebenen Verbindungen zwischen Komponenten sind als funktionale Verbindungen zu verstehen. Sie können direkt oder indirekt über mehrere andere Komponenten realisiert werden.

Das dargestellte System kann im Rahmen der Erfindung auf vielfältige Weise abgewandelt werden, sowohl durch das Hinzufügen von Komponenten also auch durch das Weglassen von Komponenten, sowie durch das Abwandeln von Komponenten. Hierdurch können sich jeweils weitere oder alternative Vorteile ergeben.

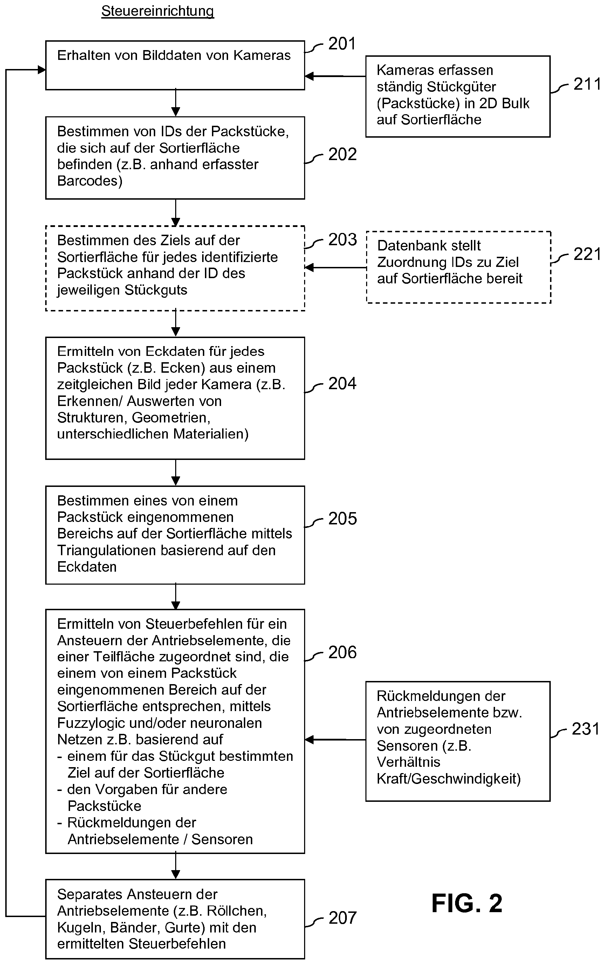

Figur 2 ist ein Ablaufdiagramm, das ein Ausführungsbeispiel eines erfindungsgemäßen Verfahrens, durchgeführt in dem System aus Figur 1, illustriert.

Die auf der linken Seite dargestellten Aktionen werden dabei von der Steuereinrichtung 120 ausgeführt, wenn der Prozessor 121 entsprechende Programmanweisungen aus dem Programmspeicher 122 ausliest und ausführt und die Steuereinrichtung 120 damit zum Ausführen der Aktionen veranlasst.

Die Förderanlage kann dazu vorgesehen sein, erhaltene Packstücke für einen Weitertransport zu sortieren. Die Packstücke, als beispielhafte Stückgüter, können beispielsweise Pakete sein. In der Förderanlage werden dem Sortierer Packstücke von dem Zufuhrgurt 112 als 2D-Bulk zugeführt. Die Packstücke befinden sich auch auf der Sortierfläche 110 des Sortierers als 2D-Bulk. Die Kameras 141, 142 erfassen regelmäßig und in kurzen Abständen alle Packstücke auf der gesamten Sortierfläche 110 des Sortierers. Die Bilddaten werden an die Steuereinrichtung 120 übermittelt. (Aktion 211)

Die Steuereinrichtung 120 erhält die Bilddaten von den Kameras 141, 142. (Aktion 201)

Zunächst werden anhand der Bilddaten Identifizierungen aller Packstücke auf der Sortierfläche bestimmt. Solche Identifizierungen können beispielsweise Barcodes sein. Sie können aber auch auf einer Texterkennung oder anderen Auswertungen der Bilddaten basieren. (Aktion 202)

Für jedes Packstück wird anhand der Identifizierung ein Ziel 113, 114, 115 an der Sortierfläche 110 bestimmt. (Aktion 203) So können an den Rampen 113, 114 beispielsweise Rollcontainer positioniert sein, mit denen Packstücke je nach Endziel in verschiedene Zustellfahrzeuge verbracht werden sollen. Andere Packstücke sollen möglicherweise mittels Förderband 115 zunächst an eine andere Einheit der Förderanlage verbracht werden. Von dort könnten sie beispielsweise über Teleskopförderer in größere Fahrzeuge verbracht werden, mit denen sie zunächst in andere Städte oder zu einem Flughafen, usw., befördert werden.

Das Ziel an der Sortierfläche 110 kann auf verschiedene Weisen ermittelt werden. Beispielsweise kann ein zentraler Server 130 eine Zuordnung von Identifizierungen zu Endzielen in einem Speicher 131 gespeichert haben. Die Identifizierungen könnten alternativ aber auch selber das Endziel beinhalten. Jedem Endziel könnte dann in dem Speicher 131 ein jeweiliges Ziel an der Sortierfläche von mindestens einem Sortierer der Förderanlage zugeordnet sein. Wenn Packstücke mit einem bestimmten Endziel mehrere Sortierer der Förderanlage durchlaufen, so kann für das Endziel für jeden dieser Sortierer ein Ziel an der zugehörigen Sortierfläche gespeichert sein. Die Steuereinrichtung 120 könnte dann von dem Server 130 die Ziele an der Sortierfläche 110 für alle ermittelten Identifizierungen abrufen. Der Server 130 sucht dann die Endziele der Packstücke anhand der erhaltenen Identifizierungen aus dem Speicher heraus, ermittelt anhand der Endziele die Ziele 113, 114, 115 an der Sortierfläche 110 und stellt der Steuereinrichtung 120 die Zuordnungen von Identifizierungen zu Zielen an der Sortierfläche 110 zur Verfügung. (Aktion 221)

Alternativ könnte die Steuereinrichtung 120 selber eine Zuordnung von Endzielen zu Zielen an der Sortierfläche 110 speichern. In dem Fall könnten nur die Endziele für die ermittelten Identifizierungen von dem Server 130 abgerufen werden, soweit diese sich nicht direkt aus den Identifizierungen ergeben. Anhand des Endziels jedes identifizierten Packstücks kann die Steuereinrichtung 120 dann ein Ziel 113, 114, 115 an der Sortierfläche 110 bestimmen.

Des Weiteren bestimmt die Steuereinrichtung 120 Eckdaten für jedes identifizierte Packstück aus zeitgleich aufgenommenen Bildern der beiden Kameras 141, 142. (Aktion 204) Die Eckdaten können beispielsweise die oberen Ecken einer Oberseite eines Packstücks sein. Die Bestimmung solcher Ecken kann anhand der Bilddaten mittels Erkennung von Strukturen, Geometrien und unterschiedlichen Materialien für eine Kantendetektion erfolgen, wobei detektierte Kanten Rückschlüsse auf die Ecken eines Packstücks zulassen.

Basierend auf den Eckdaten bestimmt die Steuereinrichtung 120 dann einen aktuell von einem Packstück eingenommenen Bereich auf der Sortierfläche 110 des Sortierers. (Aktion 205) Das heißt, die Steuereinrichtung 120 bestimmt nicht nur eine punktuelle Position des Packstücks, sondern Position, Umfang und Lage einer eingenommenen Fläche. Die Bestimmung des Bereichs kann mittels einer Mehrzahl von Triangulationen erfolgen.

Wird ein Punkt im Raum von zwei Orten aus gesehen und sind die Positionen dieser Orte, und damit auch die Distanz der Orte zueinander, sowie der Winkel mit denen der Punkt von dem jeweiligen Ort bezüglich einer Verbindungslinie zwischen den Orten gesehen wird, bekannt, so kann aus dieser Information mittels Triangulation die genaue Position des Punktes im Raum bestimmt werden. Werden nun beispielsweise mittels einer jeweiligen solchen Triangulation die Positionen der oberen Ecken eines quaderförmigen Packstücks auf einer Sortierfläche 110 bestimmt, so lässt sich daraus ableiten, welchen Bereich der Sortierfläche 110 das Packstück belegt.

Wird ein Packstück aus Sicht einer Kamers 141, 142 teilweise von einem anderen Packstück verdeckt, so können die verdeckten Ecken in dem Bild der betroffenen Kamera geschätzt werden, in dem der Übergang zwischen den Packstücken im Bild als Kante des teilweise verdeckten Packstücks angesehen wird. Da der so von dem Packstück als belegt angenommene Bereich kleiner ist als der tatsächlich belegte Bereich, ist dies für die Ansteuerung unproblematisch. An einer Sortierfläche könnten mehr als zwei Kameras beispielsweise auch eingesetzt werden, um die Wahrscheinlichkeit zu erhöhen, dass von jedem Packstück jederzeit alle oberen Ecken von jeweils mindestens zwei Kameras erfasst werden können.

Wenn die von allen Packstücken belegten Bereiche auf der Sortierfläche 110 bestimmt wurden, werden Steuerbefehle für ein Ansteuern der Antriebselemente des Sortierers ermittelt. Die Ermittlung erfolgt beispielsweise unter Nutzung von Fuzzy-Logic, eines neuronalen Netzes oder einer Kombination aus beidem. (Aktion 206) Die Steuerbefehle werden jeweils separat für die Antriebselemente ermittelt, die einer Teilfläche zugeordnet sind, die einem jeweils von einem Packstück belegten Bereich entsprechen. Die Teilflächen können so ausgewählt werden, dass jeweils nur Antriebselemente angesteuert werden, die vollständig unterhalb des jeweils belegten Bereichs befinden. Auf diese Weise kann sichergestellt werden, dass sich keine gegensätzlichen Steuerbefehle für die gleichen Antriebselemente für unterschiedliche Packstücke ergeben. Es könnte aber auch vorgesehen werden, dass zum Beispiel die in Bewegungsrichtung des Packstücks unmittelbar vor dem aktuell belegten Bereich liegenden Antriebselemente auch schon angesteuert werden, zumindest dann, wenn sich kein Konflikt ergibt. Die Antriebselemente werden so angesteuert, dass sie das Packstück so bewegen, dass es sich in Richtung des Ziels des Packstücks an der Sortierfläche 110 bewegt. Die Bewegung muss dabei allerdings nicht direkt auf das Ziel zuführen und sie muss nicht immer sofort erfolgen. So können neben dem Ziel auch andere Kriterien berücksichtigt werden. So können für die Steuerbefehle bezüglich eines Packstücks auch die Positionen und Ziele anderer Packstücke berücksichtigt werden, damit die Packstücke sich auf ihrem Weg nicht gegenseitig blockieren. Unter Berücksichtigung solcher Informationen kann beispielsweise die Richtung der Bewegung mindestens eines der Packstücke angepasst werden. Optional kann auch eine Anpassung der Geschwindigkeit der Antriebselemente mittels der Steuerbefehle dazu beitragen, Kollisionen zu vermeiden, wobei die Geschwindigkeit kurzzeitig auch auf Null reduziert werden könnte.

Es versteht sich, dass zusätzlich oder alternativ auch Steuerbefehle für beliebige andere Ansteuerungen vorgesehen werden können. So könnten beispielsweise Packstücke anhand der Bilddaten in gewissen Situationen zunächst nur als unscharfe Menge erkannt werden. Zum Beispiel könnte in einem Bereich wahrscheinlichkeitsbasiert "ungefähr" ein Packstück erkannt werden oder es könnten "ungefähr" zwei sehr nahe beieinander liegende Packstücke erkannt werden. In einem solchen Fall könnten die Antriebselemente veranlasst werden, sich unter dem "ungefähr" einen Packstück oder den "ungefähr" zwei Packstücken in einem vorderen Bereich schneller und in einem hinteren Bereich langsamer zu bewegen, um im Fall von zwei Packstücken eine eindeutige Trennung zu bewirken und damit eine effektive separate Behandlung der zwei Packstücke zu ermöglichen.

Die ermittelten Steuerbefehle werden dann genutzt, um die unter den Packstücken befindlichen Antriebselemente anzusteuern. (Aktion 207)

Zusätzlich oder alternativ könnten bei der Ermittlung der Steuerbefehle in Aktion 206 Rückmeldungen von den Antriebselementen berücksichtigt werden. (Aktion 231) Diese Rückmeldungen könnten beispielsweise umfassen, mit welcher Geschwindigkeit sich die Antriebselemente bei der vorgesehenen Antriebskraft bewegen. Zum einen könnte so für schwere Packstücke eine größere Kraft aufgewendet werden, damit sie ähnlich schnell wie leichtere Packstücke bewegt werden können. Zum anderen könnte ein Stillstand von Antriebselementen oder gar eine Bewegung entgegen der aufgrund der Steuerbefehle vorgesehenen Bewegung darauf hinweisen, dass sich zwei Packstücke blockieren. In dem Fall könnte eine alternative Ansteuerung zum Erzielen einer Ausweichbewegung erfolgen.

Auch Daten von beliebigen anderen Sensoren könnten in die Ermittlung der Steuerbefehle eingehen.

Die Aktionen 201 bis 207 werden regelmäßig wiederholt, beispielsweise einmal pro Sekunde. Jede andere Wiederholrate ist ebenso möglich. Es versteht sich, dass die Bestimmung des Ziels an der Sortierfläche 110 für ein identifiziertes Packstück in Aktion 203 dabei nur einmalig erfolgen muss. Das ist in Figur 2 dadurch angedeutet, dass die Aktionen 203 und 221 als Boxen mit gestrichelten Linien dargestellt sind.

Bestimmte Ausführungsformen der Erfindung sehen also vor, dass Stückgüter in einer Förderanlage mittels Bilddaten von Kameras kontinuierlich identifiziert und gleichzeitig verortet werden, während sie sich in einer Menge von Stückgütern auf einer Sortierfläche befinden. Mittels der adaptive Wegverfolgung basierend auf einer ständigen Vermessung der Position der Packstücke kann jedes Stückgut an seiner Position dann fördertechnisch individuell so manipuliert werden, dass die Bewegung der Packstücke ständig optimal an die jeweilige Gesamtsituation angepasst werden kann. Das ermöglicht eine besonders flächeneffiziente Nutzung der Sortierfläche.

Die Blöcke 201-207 in Figur 2 können auch als Repräsentation von entsprechenden Programmanweisungen in Programmspeicher 122 gesehen werden.

Das bespielhaft dargestellte Verfahren kann im Rahmen der Erfindung auf vielfältige Weise abgewandelt werden, sowohl durch das Hinzufügen von Aktionen, durch das Weglassen von Aktionen und durch das Abwandeln von Aktionen. Hierdurch können sich jeweils weitere Vorteile ergeben. Auch die Abfolge der geschilderten Aktionen in dem Ablaufdiagramm in Figur 2 ist nicht zwingend; alternative Abfolgen sind denkbar. Schließlich können die Aktionen auf verschiedene Art und Weise implementiert werden.

Es versteht sich, dass die beschriebenen Ausführungsformen generell lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren umfassend:
- Erhalten von Daten von mindestens einer Erfassungseinrichtung (141, 142), die mindestens zwei Kameras umfasst und regelmäßig Stückgüter auf einer Sortierfläche (110) einer Förderanlage erfasst, wobei mehreren Teilflächen (111) der Sortierfläche (110) jeweils ein separat ansteuerbares Antriebselement zugeordnet ist,
- regelmäßiges Bestimmen eines von einem jeweiligen Stückgut eingenommenen Bereichs auf der Sortierfläche (110) basierend auf den erhaltenen Daten mittels Triangulationen, solange sich das Stückgut auf der Sortierfläche (110) befindet,
- Ermitteln von Steuerbefehlen für ein Ansteuern der Antriebselemente, die einer Teilfläche (111) zugeordnet sind, die einem von einem jeweiligen Stückgut eingenommenen, bestimmten Bereich auf der Sortierfläche (110) entsprechen, basierend auf einem für das jeweilige Stückgut vorgesehenen Ziel (113, 114, 115) an der Sortierfläche (110) und
- Ansteuern der Antriebselemente mit den ermittelten Steuerbefehlen.

2. Verfahren gemäß Anspruch 1, ferner umfassend:
- Bestimmen einer Identifizierung der Stückgüter, die sich auf der Sortierfläche (110) befinden, und
- Bestimmen des vorgesehenen Ziels (112, 113, 115) an der Sortierfläche (110) für jedes identifizierte Stückgut anhand der Identifizierung des jeweiligen Stückguts.

3. Verfahren gemäß Anspruch 1 oder 2, wobei das Bestimmen eines von einem jeweiligen Stückgut eingenommenen Bereichs auf der Sortierfläche (110) mittels Triangulationen basierend auf den erhaltenen Daten zum Ermitteln von Eckdaten für die Triangulationen folgendes umfasst:
- Auswerten von Strukturmerkmalen und/oder
- Auswerten von Geometrien und/oder
- Erkennen unterschiedlicher Materialien.

4. Verfahren gemäß einem der Ansprüche 1 bis 3, wobei für das Ermitteln von Steuerbefehlen für ein Ansteuern der Antriebselemente für ein jeweiliges Stückgut zusätzlich berücksichtigt wird:
- von anderen Stückgütern eingenommene Bereiche auf der Sortierfläche (110) und/oder
- die Ziele von anderen Stückgütern an der Sortierfläche (110) und/oder
- eine Ausgabe von mindestens einem Sensor.

5. Verfahren gemäß einem der Ansprüche 1 bis 4, wobei für das Ermitteln von Steuerbefehlen für ein Ansteuern der Antriebselemente für ein jeweiliges Stückgut zusätzlich berücksichtigt wird:
- eine Auswertung eines dynamischen Verhaltens des Stückguts in Reaktion auf vorausgehende Ansteuerungen von.Antriebselementen für das Stückgut.

6. Verfahren gemäß einem der Ansprüche 1 bis 5, wobei die Ansteuerung der Antriebselemente eine adaptive Ansteuerung ist, die mittels
- Fuzzylogic oder
- neuronalem Netzwerk oder
- einem Fuzzy-Neuro-System
realisiert ist.

7. Vorrichtung (120) umfassend Mittel (121-127) zum Veranlassen der Vorrichtung (120) oder eines Systems, das Verfahren nach einem der Ansprüche 1 bis 6 auszuführen, wobei die Vorrichtung (120) oder das System ferner zumindest eine Erfassungseinrichtung (141, 142) umfasst, die mindestens zwei Kameras umfasst und eingerichtet ist, regelmäßig Stückgüter auf einer Sortierfläche (110) einer Förderanlage zu erfassen, wobei mehreren Teilflächen (111) der Sortierfläche (110) jeweils ein separat ansteuerbares Antriebselement zugeordnet ist, wobei die Vorrichtung (120) eingerichtet ist, regelmäßig einen von einem jeweiligen Stückgut eingenommenen Bereich auf der Sortierfläche (110) basierend auf den erhaltenen Daten mittels Triangulationen, solange sich das Stückgut auf der Sortierfläche (110) befindet, zu bestimmen, wobei die Vorrichtung (120) ferner eingerichtet ist, Steuerbefehle für ein Ansteuern der Antriebselemente, die einer Teilfläche (111) zugeordnet sind, die einem von einem jeweiligen Stückgut eingenommenen, bestimmten Bereich auf der Sortierfläche (110) entsprechen, basierend auf einem für das jeweilige Stückgut vorgesehenen Ziel (113, 114, 115) an der Sortierfläche (110) zu ermitteln, und wobei die Vorrichtung (120) ferner eingerichtet ist, die Antriebselemente mit den ermittelten Steuerbefehlen anzusteuern.

8. Vorrichtung (120) nach Anspruch 7, wobei die Mittel folgendes umfassen:
- mindestens einen Speicher (122) mit Programmanweisungen und
- mindestens einen Prozessor (121) eingerichtet zum Ausführen von Programmanweisungen aus dem mindestens einen Speicher (122).

9. Vorrichtung nach Anspruch 7 oder 8, wobei die Vorrichtung
- ein Modul für eine Steuereinrichtung oder
- eine Steuereinrichtung oder
- ein Computer oder
- ein Server
ist.

10. System umfassend eine Vorrichtung (120) gemäß einem der Ansprüche 7 bis 9 und
- die Förderanlage mit der Sortierfläche (110), und/oder
- die mindestens eine Erfassungseinrichtung (141, 142) angeordnet zum Erfassen von Stückgütern auf der Sortierfläche (110).

11. Computerprogramm mit Programmanweisungen, die dazu eingerichtet sind, eine Vorrichtung (120) nach einem der Ansprüche 7 bis 9 oder ein System nach Anspruch 10 zu veranlassen, das Verfahren nach einem der Ansprüche 1 bis 6 durchzuführen, wenn sie von mindestens einem Prozessor (121) ausgeführt werden.

## Claims

1. Method comprising:
- receiving data from at least one detection device (141, 142) which comprises at least two cameras and regularly detects single items on a sorting surface (110) of a conveying system, wherein several partial surfaces (111) of the sorting surface (110) are each assigned a separately controllable drive element,
- regularly determining a region on the sorting surface taken up by a respective item (110) based on the data obtained by means of triangulations for as long as the item is situated on the sorting surface (110),
- determining control commands for actuating the drive elements which are assigned to a partial surface (111) corresponding to a specific region on the sorting surface (110) taken up by a respective item, on the basis of a destination (113, 114, 115) provided for the respective item on the sorting surface (110), and
- actuating the drive elements with the determined control commands.

2. A method according to claim 1, further comprising:
- determining an identification of the single items which are situated on the sorting surface (110), and
- determining the intended destination (112, 113, 115) at the sorting surface (110) for each identified item on the basis of the identification of the respective item.

3. A method according to claim 1 or 2, wherein determining a region taken up by a respective item on the sorting surface (110) by means of triangulations based on the obtained data for determining benchmark data for the triangulations comprises:
- evaluating structural features and/or
- evaluating geometries and/or
- identifying different materials.

4. Method according to any one of claims 1 to 3, wherein the following is additionally taken into account for determining control commands for actuating the drive elements for a respective single item:
- regions on the sorting surface (110) taken up by other single items and/or
- the destinations of other single items at the sorting surface (110) and/or
- an output from at least one sensor.

5. Method accordingto any one of claims 1 to 4, wherein the following is additionally taken into account for determining control commands for actuating the drive elements for a respective single item:
- an evaluation of a dynamic behavior of the single item in response to preceding actuations of the drive elements for the single item.

6. Method according to any one of claims 1 to 5, wherein the actuation of the drive elements is an adaptive actuation, which is realized by means of
- Fuzzy logic or
- neural network or
- a fuzzy neuro-system
is realized.

7. Apparatus (120) comprising means (121-127) for causing the apparatus (120) or a system to perform the method according to one of claims 1 to 6, wherein the apparatus (120) or the system further comprises at least one detection device (141, 142) which comprises at least two cameras and is configured to regularly detect single items on a sorting surface (110) of a conveying system, wherein a plurality of partial surfaces (111) of the sorting surface (110) are each assigned to a separately controllable drive element, wherein the device (120) is configured to regularly determine a region on the sorting surface (110) taken up by the respective single item on the basis of the obtained data by means of triangulations for as long as the single item is situated on the sorting surface (110), the device (120) furthermore being configured to determine control commands for actuating the drive elements, which are assigned to a partial surface (111) and correspond to a specific region on the sorting surface (110) taken up by the respective single item, on the basis of a destination (113,114, 115) provided for the respective item on the sorting surface (110), and wherein the device (120) is further configured to actuate the drive elements with the determined control commands.

8. Apparatus (120) according to claim 7, wherein said means comprises:
- at least one memory (122) with program instructions and
- at least one processor (121) arranged to perform program instructions from the at least one memory (122).

9. Device according to claim 7 or 8, wherein the device is
- a module for a control device or
- a control device or
- a computer or
- a server.

10. A system comprising a device (120) according to any one of claims 7 to 9 and
- the conveyor with the sorting surface (110), and/or
- the at least one detection device (141, 142) arranged for detecting single items on the sorting surface (110).

11. A computer program comprising program instructions configured to cause a device (120) according to any one of claims 7 to 9 or a system according to claim 10 to perform the method according to any one of claims 1 to 6 when executed by at least one processor (121).

## Revendications

1. Procédé comprenant :
- obtenir des données d'au moins un dispositif de détection (141, 142), qui comprend au moins deux caméras et détecte régulièrement des articles sur une surface de tri (110) d'une installation de transport, où à plusieurs surfaces partielles (111) de la surface de tri (110) est respectivement associé un élément d'entraînement pouvant être commandé séparément,
- déterminer régulièrement une zone occupée par un article respective sur la surface de tri (110) sur la base des données obtenues au moyen de triangulations, tant que l'article se trouve sur la surface de tri (110),
- déterminer des instructions de commande pour une commande des éléments d'entraînement qui sont associés à une surface partielle (111) qui correspond à une zone déterminée occupée par un article respectif sur la surface de tri (110), sur la base d'une destination (113, 114, 115) prévue pour l'article respectif au niveau de la surface de triage (110) et
- commander les éléments d'entraînement avec les instructions de commande déterminées.

2. Procédé selon la revendication 1, comprenant en outre :
- déterminer une identification des articles se trouvant sur la surface de tri (110), et
- déterminer la destination (112,113,115) prévue au niveau de la surface de tri (110) pour chaque article identifié à partir de l'identification de l'article respectif.

3. Procédé selon la revendication 1 ou 2, dans lequel la détermination d'une zone occupée par un article respectif sur la surface de tri (110) au moyen de triangulations basées sur les données obtenues pour déterminer des données de référence pour les triangulations comprend ce qui suit :
- évaluer des caractéristiques de structure et/ou
- évaluer des géométries et/ou
- reconnaître des matériaux différents.

4. Procédé selon l'une des revendications 1 à 3, dans lequel, pour la détermination d'instructions de commande pour une commande des éléments d'entraînement pour un article respectif, il est en outre tenu compte :
- de zones occupées par d'autres articles sur la surface de tri (110) et/ou
- de destinations d'autres articles au niveau de la surface de tri (110) et/ou
- d'une sortie d'au moins un capteur.

5. Procédé selon l'une des revendications 1 à 4, dans lequel, pour la détermination d'instructions de commande pour une commande des éléments d'entraînement pour un article respectif, il est en outre tenu compte :
- d'une évaluation d'un comportement dynamique de l'article en réaction à des commandes précédentes d'éléments d'entraînement pour l'article.

6. Procédé selon l'une quelconque des revendications 1 à 5, dans lequel la commande des éléments d'entraînement est une commande adaptative qui est réalisée au moyen de
- logique floue ou
- d'un réseau neuronal ou
- d'un système de neurones flous.

7. Dispositif (120) comprenant des moyens (121-127) pour amener le dispositif (120) ou un système à exécuter le procédé selon l'une des revendications 1 à 6, où le dispositif (120) ou le système comprend en outre au moins un dispositif de détection (141, 142) qui comprend au moins deux caméras et qui est conçu pour détecter régulièrement des articles sur une surface de tri (110) d'une installation de transport, où à plusieurs surfaces partielles (111) de la surface de tri (110) est respectivement associé un élément d'entraînement pouvant être commandé séparément, où le dispositif (120) est configuré pour déterminer régulièrement une zone occupée par un article respective sur la surface de tri (110) sur la base des données obtenues au moyen de triangulations, tant que l'article se trouve sur la surface de tri (110), où le dispositif (120) est en outre configuré pour déterminer des instructions de commande pour une commande des éléments d'entraînement qui sont associés à une surface partielle (111) qui correspond à une zone déterminée occupée par un article respectif sur la surface de tri (110), sur la base d'une destination (113, 114, 115) prévue pour l'article respectif au niveau de la surface de triage (110), et où le dispositif (120) est configuré pour commander les éléments d'entraînement avec les instructions de commande déterminées.

8. Dispositif (120) selon la revendication 7, dans lequel les moyens comprennent :
- au moins une mémoire (122) contenant des instructions de programme, et
- au moins un processeur (121) configuré pour exécuter des instructions de programme de l'au moins une mémoire (122).

9. Dispositif selon la revendication 7 ou 8, dans lequel le dispositif est
- un module pour un dispositif de commande ou
- un dispositif de commande ou
- un ordinateur ou
- un serveur.

10. Système comprenant un dispositif (120) selon l'une des revendications 7 à 9 et
- l'installation de transport avec la surface de tri (110), et/ou
- l'au moins un dispositif de détection (141, 142) disposé pour détecter des articles sur la surface de tri (110).

11. Programme d'ordinateur comprenant des instructions de programme configurées pour amener un dispositif (120) selon l'une des revendications 7 à 9 ou un système selon la revendication 10 à mettre en œuvre le procédé selon l'une des revendications 1 à 6 lorsqu'elles sont exécutées par au moins un processeur (121).
